# EUROPEAN PATENT APPLICATION

(11) **EP 4 797 857 A1**
(43) Date of publication of application: **26.08.2026**
(21) Application number: 23956107.9
(22) Date of filing: 19.10.2023
(51) Int. Cl.: H04W 74/0833, H04W 48/18, H04W 72/21, H04W 72/231

(54) **TERMINAL, WIRELESS COMMUNICATION METHOD, AND BASE STATION**

(71) Applicant: NTT DOCOMO, INC., Tokyo 100-6150 (JP)
(72) Inventor: SHICHIJO, taichi, Tokyo 100-6150 (JP); KURITA, Daisuke, Tokyo 100-6150 (JP); HARADA, Hiroki, Tokyo 100-6150 (JP); IKEUCHI, takashi, Tokyo 100-6150 (JP)
(74) Representative: Hoffmann Eitle
(86) International application number: PCT/JP2023/037925
(87) International publication number: WO 2025/083860

(57) **Abstract**

A terminal according to an aspect of the present disclosure includes: a receiving section that receives a plurality of random access channel configurations, each of the plurality of random access channel configurations being associated with a public land mobile network indicator (PLMN ID); and a control section that controls, based on a PLMN ID associated with the terminal and on at least one of the plurality of random access channel configurations, determination of a random access preamble and reception of a random access response for the random access preamble. An aspect of the present disclosure allows a resource for an initial access to be appropriately determined.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is under study that a plurality of operators share a site/ resource and the like, for the purpose of more efficient use of frequency bands (existing frequency bands and new high frequency bands).

However, studies have not sufficiently been made on how a plurality of operators share a resource for an initial access. If such studies are not sufficiently made, flexible communication operation for each operator may not be able to be performed, causing communication quality enhancement to be suppressed.

In view of this, an object of the present disclosure is to provide a terminal, a radio communication method, and a base station that appropriately determine a resource for an initial access.

### Solution to Problem

A terminal according to an aspect of the present disclosure includes: a receiving section that receives a plurality of random access channel configurations, each of the plurality of random access channel configurations being associated with a public land mobile network indicator (PLMN ID); and a control section that controls, based on a PLMN ID associated with the terminal and on at least one of the plurality of random access channel configurations, determination of a random access preamble and reception of a random access response for the random access preamble.

### Advantageous Effects of Invention

An aspect of the present disclosure allows a resource for an initial access to be appropriately determined.

### Brief Description of Drawings

[FIG. 1] FIGS. 1A to 1D are each a diagram to show an example of a sharing scenario.
[FIG. 2] FIGS. 2A and 2B are each a diagram to show an example of an association according to Embodiment 1-1.
[FIG. 3] FIGS. 3A and 3B are each a diagram to show an example of an association according to Embodiment 1-2.
[FIG. 4] FIG. 4 is a diagram to show an example of a schematic structure of a radio communication system according to one embodiment.
[FIG. 5] FIG. 5 is a diagram to show an example of a structure of a base station according to one embodiment.
[FIG. 6] FIG. 6 is a diagram to show an example of a structure of a user terminal according to one embodiment.
[FIG. 7] FIG. 7 is a diagram to show an example of a hardware structure of the base station and the user terminal according to one embodiment.
[FIG. 8] FIG. 8 is a diagram to show an example of a vehicle according to one embodiment.

### Description of Embodiments

### (Initial Access Procedure)

In an initial access procedure, a UE (RRC_IDLE mode) performs reception of an SS/PBCH block (SSB), transmission of message (Msg.) 1 (PRACH / random access preamble / preamble), reception of Msg.2 (PDCCH, PDSCH including a random access response (RAR)), transmission of Msg.3 (PUSCH scheduled by an RAR UL grant), and reception of Msg.4 (PDCCH, PDSCH including UE contention resolution identity). Then, when an ACK for Msg.4 by a base station (network) is transmitted from the UE, RRC connection is established (RRC CONNECTED mode).

The reception of an SSB includes PSS detection, SSS detection, PBCH-DMRS detection, and PBCH reception. In the PSS detection, detection of part of a physical cell ID (PCI), detection (synchronization) of an OFDM symbol timing, and (coarse) frequency synchronization are performed. The SSS detection includes detection of a physical cell ID. The PBCH-DMRS detection includes detection of (part of) an SSB index in a half radio frame (5 ms). The PBCH reception includes detection of a system frame number (SFN) and radio frame timing (SSB index), reception of configuration information for remaining minimum system information (RMSI, SIB1) reception, and recognition of whether the UE is able to camp in the cell (carrier).

An SSB has a band of 20 RBs and a time of four symbols. The transmission periodicity of the SSB is configurable from {5, 10, 20, 40, 80, 160} ms. In a half frame, a plurality of SSB symbol positions are defined based on a frequency range (FR1, FR2).

A PBCH has a payload of 56 bits. N repetitions of a PBCH are transmitted in periodicity of 80 ms. N depends on the SSB transmission periodicity.

System information includes an MIB carried on a PBCH, RMSI (SIB1), and other system information (OSI). SIB1 includes information to perform an RACH configuration and an RACH procedure. The time/frequency resource relation between an SSB and a PDCCH monitoring resource for SIB1 is configured by the PBCH.

A PDSCH that carries SIB1 (SIB1 PDSCH) is transmitted periodically. Such a PDSCH is scheduled by a type-0-PDCCH. One SSB corresponds to one SIB1 PDSCH. One SIB1 PDSCH may be repeated twice or may not be repeated. SIB1 configures a public land mobile network (PLMN) ID. A PLMN ID may be referred to as a Mobile Network Operator (MNO) identifier.

A PLMN ID is a global and unique identifier used for identification of an MNO.

A UE identifies an MNO for a network access operation to be performed, based on a specific parameter (for example, a PLMN ID information list (for example, PLMN-IdentityInfoList) in cell access related information (for example, CellAccessRelatedInfo)) in system information (for example, SIB1).

A base station that uses beam correspondence transmits a plurality of SSBs by using the respective beams (analog beams) every SSB transmission periodicity. The plurality of SSBs may be referred to as an SSB burst. The plurality of SSBs have the respective SSB indices. A UE having detected one SSB transmits a PRACH in an RACH occasion associated with the SSB index and receives an RAR in an RAR window.

### (Sharing Between Plurality of MNOs)

For 6G, some requirements below are under study.
- ultra wideband communication (ultra wideband communication).
- mission critical communication (mission critical communication).
- ultra massive connection.
- universal coverage.
- intelligent connection.
- ubiquitous sensing.
- new use cases.

In addition to the goals described above, some new concepts below can be goals.
- extensible (for example, more future-proof).
- customizable (for example, making operation easier).
- sustainable (for example, cost reduction, more robust).

In order to reduce base station deployment cost, with respect to operation in a licensed spectrum, factors below for sharing between mobile network operators (MNOs) can be studied.
- existing sharing from LTE (equipment sharing). Core network sharing (gateway core network, GWCN, multi-operator core network, MOCN). Different operators share a cell and the different operators are possible to be provided with different PLMN IDs.
- RAN sharing (multi-operator RAN, MORAN). Different operators share base station hardware and the different operators are possible to be provided with different cells.
- site sharing. Different operators share a site and the different operators are possible to be provided with different base stations.
- spectrum sharing

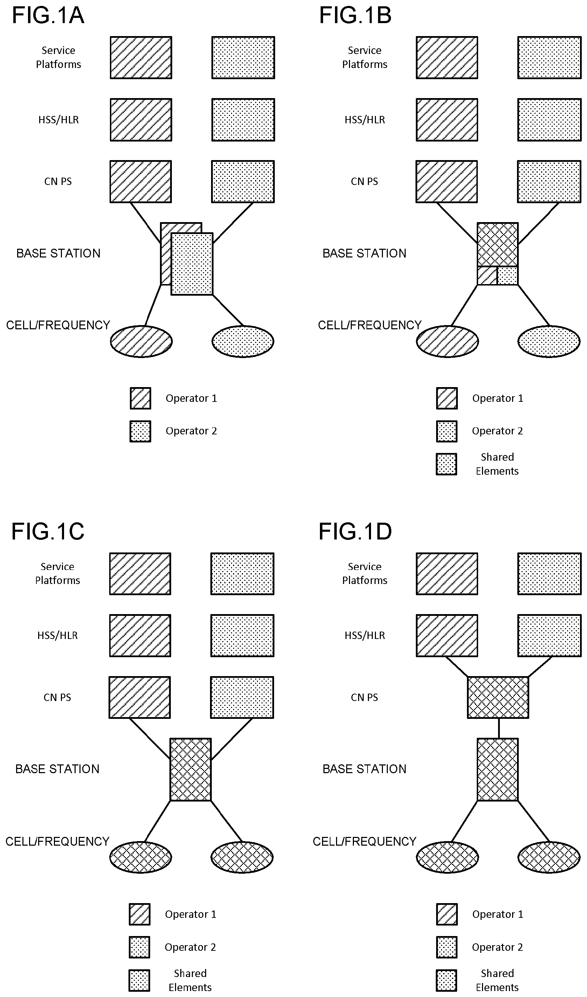

FIGS. 1A to 1D are each a diagram to show an example of a sharing scenario.

FIG. 1A shows an example of site sharing. As shown in FIG. 1A, in site sharing, a plurality of operators share an antenna site. On the other hand, service platforms, HSSs (Home Subscriber Servers)/HLRs (Home Location Registers), core network packet switchings (CN PSs), base stations, and cells/frequencies are independent for the respective operators.

FIG. 1B shows an example of MORAN (Multi Operator RAN). As shown in FIG. 1B, in MORAN, a plurality of operators share part of a base station (for example, base station hardware) in addition to an antenna site. On the other hand, service platforms, HSSs/HLRs, CN PSs, the other part of the base station (for example, base station software), and cells/frequencies are independent for the respective operators.

FIG. 1C shows an example of MOCN (Multi Operator Core Network). As shown in FIG. 1C, in MOCN, a plurality of operators share a base station and a cell/frequency. On the other hand, service platforms, HSSs/HLRs, and CN PSs are independent for the respective operators.

FIG. 1D shows an example of GWCN (Gateway Core Network). As shown in FIG. 1D, in GWCN, a plurality of operators share a CN PS, a base station, and a cell/frequency. On the other hand, service platforms and HSSs/HLRs are independent for the respective operators.

For example, in MOCN/GWCN, a plurality of operators share a cell, and thus it is preferable that a configuration be modifiable per operator (for example, per ID related to a public land mobile network (PLMN) (PLMN ID)).

For example, in an existing specification (for example, Rel. 17 or earlier versions), whether to accept an initial access to a cell, a tracking area code, a specific cell ID in a PLMN, and the like are configurable per PLMN ID.

Meanwhile, for a terminal (user terminal, User Equipment (UE)) in an RRC connected state, an operator-specific configuration is configurable as an RRC configuration, depending on the PLMN ID of the terminal. Specifically, in resource sharing, in a case where only a terminal corresponding to a specific operator is desired to be able to use part of time resources of a shared cell, a terminal of another operator is possible to be configured not to use the part of the time resources.

However, in existing specifications, many of configurations (for example, broadcast information and the like) for a specific UE (for example, UE in initial access / idle mode) are not provided per operator (for example, PLMN ID), preventing such configurations from being modified between a plurality of operators. For example, a parameter (for example, ServingCellConfigCommonSIB) used for configuration of a random access channel (RACH) resource and the like, in system information block 1 (SIB1), is not provided per PLMN ID, and thus an RACH resource of a UE is not able to be configured/modified per operator.

As described above, if a configuration for such a specific UE is not modifiable between a plurality of operators, flexible communication operation for each operator may not be able to be performed and thus a flexible and appropriate resource related to an initial access may be prevented from being determined, causing communication quality enhancement to be suppressed.

In view of this, the inventors of the present invention came up with the idea of a method of applying/configuring operation policies / parameters flexibly between operators in efficient station installation / frequency utilization with resource sharing.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a_{b}, a_b, and an expression of a with b added to the lower right of a may be interchangeably interpreted. In the present disclosure, a^{c}, a^c, and an expression of a with c added to the upper right of a may be interchangeably interpreted. In the present disclosure, a_{b}^{c}, a_b^c, and an expression of a with b added to the lower right of a and c added to the upper right of a may be interchangeably interpreted. In the present disclosure, ceil(x) and ceiling function may be interchangeably interpreted. In the present disclosure, floor(x) and floor function may be interchangeably interpreted. In the present disclosure, sqrt(x) and square root (root) may be interchangeably interpreted. In the present disclosure, x~ may be expressed as x with "~" added above x or may be referred to as x tilde. In the present disclosure, x⁻ may be expressed as x with "-" added above x or may be referred to as x bar.

In the present disclosure, an MNO, an operator, a PLMN, an operator policy, a configuration per operator, and the like may be interchangeably interpreted. In the present disclosure, an MNO, an NW, a base station, a central unit (CU), a distributed unit (DU), a radio unit (RU), and a TRP may be interchangeably interpreted.

In the present disclosure, a specific ID, a PLMN ID, an ID related to a PLMN, an ID related to an operator, and the like may be interchangeably interpreted.

In the present disclosure, system information (SI), part of system information, partial system information, an MIB, an SIB, an SIB used for an initial access, SIB1, SIB X (x is any number), a downlink shared channel that carries system information, and a PDSCH that carries system information may be interchangeably interpreted.

### (Radio Communication Method)

A random access procedure in each embodiment of the present disclosure may include a specific number of steps.

For example, a random access procedure in each embodiment of the present disclosure may be a 4-step random access procedure (for example, a random access procedure using message 1 (PRACH), message 2 (RAR), message 3, and message 4), may be a 2-step random access procedure (for example, a random access procedure using message A and message B), or may be an N-step random access procedure (N is any number).

Hereinafter, in the present disclosure, although description is made taking a PLMN ID as an example of a specific ID, the name of the specific ID is not limited to this. The specific ID may mean, for example, an ID used for identification of an operator/MNO.

### <First Embodiment>

A first embodiment relates to RACH/PRACH related configuration per MNO.

A UE may receive/specify/judge a parameter/information related to an RACH (which may be referred to as an RACH related parameter/information in the present disclosure).

For example, the RACH related parameter/information may mean at least one of a parameter/information related to a time resource for the RACH, a parameter/information related to a frequency resource for the RACH, and a parameter/information related to a random access preamble.

The UE may receive an RACH configuration (for example, RACH-ConfigCommon) included in system information (for example, SIB1 or SIB X). The UE may control, based on a specific ID (for example, PLMN ID) related the UE itself and the RACH configuration, at least one of determination/transmission of a PRACH / random access preamble and reception of an RAR (message 2).

The RACH related parameter/information may be a parameter/information to be configured by using system information (for example, SIB1 or SIB X) / RACH configuration or may be any parameter/information to be identified/specified by a parameter/information included in system information (for example, SIB1 or SIB X) / RACH configuration.

The RACH configuration (for example, RACH-ConfigCommon) may include an RACH configuration generic parameter (for example, RACH-ConfigGeneric).

The RACH configuration (for example, RACH-ConfigCommon) / RACH configuration generic parameter (for example, RACH-ConfigGeneric) may be identified by a PRACH configuration index (for example, prach-ConfigurationIndex).

The PRACH configuration index (for example, prach-ConfigurationIndex) may consist of 8 bits (may be defined with a value of 0 to 255).

The PRACH configuration index (for example, prach-ConfigurationIndex) may consist of 9 or more bits (may be defined with a value of 0 to X (X is, for example, an integer greater than 255)).

Such configuration as described above allows more flexible configuration related to an RACH/PRACH to be made per PLMN ID.

The PRACH configuration index (for example, prach-ConfigurationIndex) may be associated with a parameter/information related to a random access preamble (for example, which may be referred to as a random access parameter).

The UE may determine/judge/specify the parameter/information related to the random access preamble, based on the PRACH configuration index (for example, prach-ConfigurationIndex).

For example, with use of a correspondence relation (for example, table) defined in advance in a specification, the UE may determine/judge/specify, based on the PRACH configuration index (for example, prach-ConfigurationIndex), the parameter/information related to the random access preamble.

Such a correspondence relation may be separately defined for at least one of a frequency range used by the UE (for example, FR1/FR2/FR2-1/FR2-2/FR3/FR4 or any FR) and a spectrum type (for example, any one of paired spectrum, supplementary uplink (SUL), or unpaired spectrum).

For example, the PRACH configuration index (for example, prach-ConfigurationIndex) may be associated with a parameter/information that is related to a random access preamble and related to at least one of the following:
- a format of the random access preamble (for example, a preamble length).
- x and y in N_SFN (frame number) mod x = y.
- a subframe number (for example, a periodicity related to the subframe).
- a slot number (for example, a periodicity related to the slot).
- a start symbol.
- the number of PRACH slots in a subframe.
- the number of time domain PRACH occasions in a PRACH slot.
- a PRACH duration.

Note that, in the present disclosure, the PRACH configuration index (for example, prach-ConfigurationIndex) may be interpreted as an index in a correspondence relation (for example, table) defined for all of or a combination of at least two of the parameters / pieces of information related to the random access preamble described above.

### <<Embodiment 1-1>>

For the UE, a plurality of PRACH configuration indices / specific IDs (for example, PLMN IDs) may be configured.

In a case where such a plurality of PRACH configuration indices / specific IDs (for example, PLMN IDs) are configured, an association between the PRACH configuration indices and the specific IDs may be made in accordance with a specific rule.

For example, the specific rule may be based on a specific correspondence relation (for example, table/list).

For example, a first correspondence relation including specific IDs (for example, PLMN IDs) and a second correspondence relation including PRACH configuration indices may be configured/defined. Here, in accordance with an order of the specific IDs (or PRACH configuration indices) in the first (or second) correspondence relation, an association of the PRACH configuration indices (or specific IDs) in the second (or first) correspondence relation may be made. More specifically, for example, the n-th one of the specific IDs in the first correspondence relation may be associated with the n-th one of the PRACH configuration indices in the second correspondence relation.

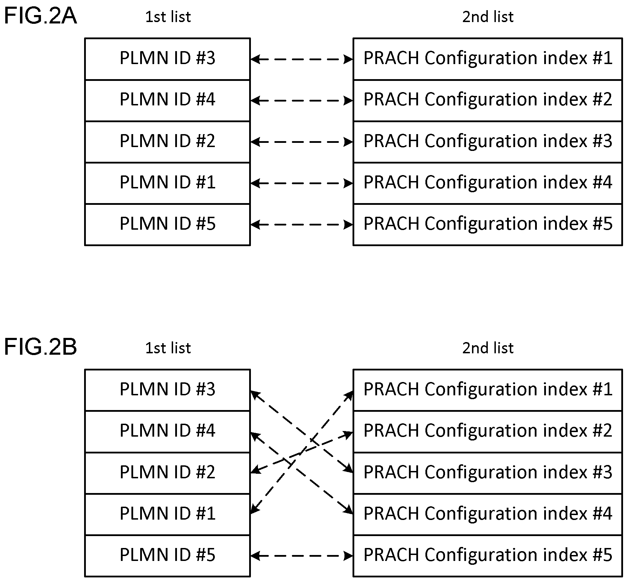

FIG. 2A is a diagram to show an example of an association according to Embodiment 1-1. In the example shown in FIG. 2A, a first list including a plurality of PLMN IDs and a second list including a plurality of PRACH configuration indices are configured/defined.

In the example shown in FIG. 2A, in accordance with an order of the PLMN IDs in the first list, an association of the PRACH configuration indices in the second list is made.

For example, a first correspondence relation including specific IDs (for example, PLMN IDs) and a second correspondence relation including PRACH configuration indices may be configured/defined. Here, in accordance with the ascending order (or descending order) of the specific IDs (or PRACH configuration indices) in the first (or second) correspondence relation, an association of the PRACH configuration indices (or specific IDs) in the second (or first) correspondence relation may be made in order. More specifically, for example, the n-th smallest (or greatest) one of the specific IDs in the first correspondence relation may be associated with the n-th one of the PRACH configuration indices in the second correspondence relation.

FIG. 2B is a diagram to show another example of the association according to Embodiment 1-1. In the example shown in FIG. 2B, a first list including a plurality of PLMN IDs and a second list including a plurality of PRACH configuration indices are configured/defined.

In the example shown in FIG. 2B, in accordance with the ascending order of the PLMN IDs in the first list, an association of the PRACH configuration indices in the second list is made.

For a plurality of PRACH configuration indices to be configured (or configurable), a specific restriction may be defined.

For example, the specific restriction may be at least one of a restriction related to a preamble (preamble format) and a restriction related to a time resource.

The specific restriction may be, for example, at least one of the following:
- The same preamble format is configurable only for the same index.
- The subframe number is the same / different between the indices.
- The start symbol is the same / different between the indices.
- The slot number is the same / different between the indices.
- The number of PRACH slots in a subframe is the same / different between the indices.
- The number of time domain PRACH occasions in a PRACH slot is the same / different between the indices.
- The PRACH duration is the same / different between the indices.

Such a plurality of PRACH configuration indices to be configured (or configurable) may be grouped.

With respect to such grouping, one or a plurality of groups from among consecutive PRACH configuration indices (for example, indices #1 to #5) may be configured or one or a plurality of groups from among consecutive/inconsecutive PRACH configuration indices (for example, indices #1, #2, #3, and #10 to #13) may be configured.

As described above, at least one of the specific restriction and grouping is defined for the plurality of PRACH configuration indices, and thus consistent configuration of a preamble/resource is able to be made depending on MNOs, allowing collision in communication by a plurality of MNOs to be avoided.

The UE may determine a cell for connection (or automatic connection / camp on) to be made or for a PRACH to be transmitted, based on (for example, making reference to) different RACH related parameters (for example, PRACH configuration indices) configured for the respective specific IDs (for example, PLMN IDs).

According to Embodiment 1-1, an association between PRACH configurations and MNOs allows PRACH related configuration different between the MNOs, enabling PRACH related configuration per MNO to be appropriately performed.

### <<Embodiment 1-2>>

One or a plurality of specific IDs (for example, PLMN IDs) may be associated with one PRACH configuration index (for example, prach-ConfigurationIndex).

A PRACH time resource different between the specific IDs may be configured/defined/determined for the one PRACH configuration index (for example, prach-ConfigurationIndex).

For example, at least one of a period scaling and a time offset different between the specific IDs may be applied/configured for the one PRACH configuration index (for example, prach-ConfigurationIndex).

For example, a first MNO (PLMN ID) and a second MNO may be associated with one PRACH configuration index, and at least one of a period scaling and time offset different between a PRACH time resource corresponding to the first MNO and a PRACH time resource corresponding to the second MNO may be applied/configured.

At least one of the period scaling and time offset may be defined/configured by using, for example, specific time units (for example, radio frame units / subframe units / slot units / symbol units / ms units).

For the period scaling, a specific parameter (for example, x in N_SFN (frame number) mod x = y) configured/defined in a PRACH configuration may be replaced with a specific value.

For example, the specific value may be determined based on a value (for example, x_PLMN #X) configured/defined per specific ID (for example, PLMN ID). For example, the specific value may be the value (for example, x_PLMN #X) configured/defined per specific ID (for example, PLMN ID) or may be determined based on a value obtained by adding/subtracting/multiplying/dividing the value (for example, x_PLMN #X) configured/defined per specific ID (for example, PLMN ID) to/from/by/into the specific parameter (for example, x in N_SFN (frame number) mod x = y) configured/defined in the PRACH configuration.

The UE may assume/expect that the value (for example, x_PLMN #X) configured/defined per specific ID (for example, PLMN ID) is configured not exceeding the specific value.

For the time offset, a specific parameter (for example, y in N_SFN (frame number) mod x = y) configured/defined in a PRACH configuration may be replaced with a specific value.

For example, the specific value may be determined based on a value (for example, y_PLMN #X) configured/defined per specific ID (for example, PLMN ID). For example, the specific value may be the value (for example, y_PLMN #X) configured/defined per specific ID (for example, PLMN ID) or may be determined based on a value obtained by adding/subtracting/multiplying/dividing the value (for example, y_PLMN #X) configured/defined per specific ID (for example, PLMN ID) to/from/by/into the specific parameter (for example, y in N_SFN (frame number) mod x = y) configured/defined in the PRACH configuration.

For the time offset, a specific parameter (for example, subframe number / slot number) configured/defined in a PRACH configuration may be replaced with a specific value.

For example, the specific value may be determined based on a value (for example, s_PLMN #X) configured/defined per specific ID (for example, PLMN ID). For example, the specific value may be the value (for example, s_PLMN #X) configured/defined per specific ID (for example, PLMN ID) or may be determined based on a value obtained by adding/subtracting/multiplying/dividing the value (for example, s_PLMN #X) configured/defined per specific ID (for example, PLMN ID) to/from/by/into the specific parameter (for example, subframe number / slot number) configured/defined in the PRACH configuration.

A plurality of period scalings, a plurality of time offsets, a plurality of specific IDs (PLMN IDs), one or more of them, or one or more kinds of them may be configured/defined. In this case, an association between at least two of each period scaling, each time offset, and each specific ID (PLMN ID) may be made in accordance with a specific rule.

For example, the specific rule may be based on a specific correspondence relation (for example, table/list).

For example, a first correspondence relation including specific IDs (for example, PLMN IDs), a second correspondence relation including period scaling values, and a third correspondence relation including time offset values may be configured/defined. Note that the second correspondence relation and third correspondence relation may be defined/configured as one correspondence relation (table/list) or may be defined/configured as separate correspondence relations.

Here, in accordance with an order of the specific IDs in the first correspondence relation, an association of at least one of each period scaling value in the second correspondence relation and each time offset value in the third correspondence relation may be made. More specifically, for example, the n-th one of the specific IDs in the first correspondence relation may be associated with at least one of the n-th one of the period scaling values in the second correspondence relation and the n-th one of the time offset values in the third correspondence relation.

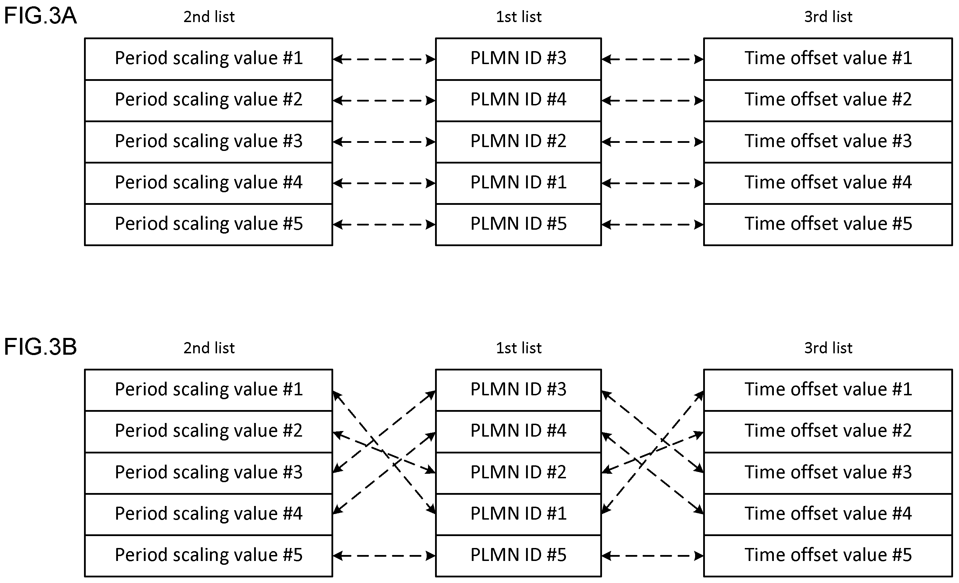

FIG. 3A is a diagram to show an example of an association according to Embodiment 1-2. In the example shown in FIG. 3A, a first list including a plurality of PLMN IDs, a second list including a plurality of period scaling values, and a third list including a plurality of time offset values are configured/defined.

In the example shown in FIG. 3A, in accordance with an order of the PLMN IDs in the first list, an association of the period scaling values in the second list and the time offset values in the third list is made.

Here, in accordance with the ascending order (or descending order) of the specific IDs in the first correspondence relation, an association of at least one of each period scaling value in the second correspondence relation and each time offset value in the third correspondence relation may be made in order. More specifically, for example, the n-th smallest (or greatest) one of the specific IDs in the first correspondence relation may be associated with at least one of the n-th one of the period scaling values in the second correspondence relation and the n-th one of the time offset values in the third correspondence relation.

FIG. 3B is a diagram to show another example of the association according to Embodiment 1-2. In the example shown in FIG. 3B, a first list including a plurality of PLMN IDs, a second list including a plurality of period scaling values, and a third list including a plurality of time offset values are configured/defined.

In the example shown in FIG. 3B, in accordance with the ascending order of the PLMN IDs in the first list, an association of the period scaling values in the second list and the time offset values in the third list is made.

According to Embodiment 1-2, an association between PRACH configurations (especially, PRACH time resources) and MNOs allows PRACH related configuration different between the MNOs, enabling PRACH related configuration per MNO to be appropriately performed.

### <<Embodiment 1-3>>

Specific information/parameter related to sequence/signal generation for an RACH preamble may be configured/defined per specific ID (for example, PLMN ID).

The specific information/parameter may be, for example, at least one of a parameter (for example, zeroCorrelationZoneConfig) indicating an index corresponding to a value (for example, N_cs) for determination of a cyclic shift, a parameter (for example, prach-RootSequenceIndex) indicating a root sequence index for a PRACH, and a parameter indicating unrestricted set or restricted set (for example, restricted type A or B).

For example, such a value (for example, N_cs) for determination of a cyclic shift may be determined based on the parameter (for example, zeroCorrelationZoneConfig) indicating an index corresponding to the value and on a type of unrestricted set / restricted set.

The specific information/parameter may be, for example, information/parameter indicating a cyclic shift value/amount with respect to a specific root sequence.

For example, such a cyclic shift value with respect to a specific root sequence (for example, a value calculated based on a multiple of N_cs), the value used for generation of a sequence for a preamble, may be defined/configured associated with a specific ID (PLMN ID).

According to Embodiment 1-3, an association between PRACH configurations (especially, configurations related to a sequence to be used for a PRACH and configurations related to signal generation for a PRACH) and MNOs allows PRACH related configuration different between the MNOs, enabling PRACH related configuration per MNO to be appropriately performed.

### <<Embodiment 1-4>>

Specific information/parameter related to a resource for a random access response (for example, RACH response / RAR) may be configured/defined per specific ID (for example, PLMN ID).

The specific information/parameter may be, for example, a parameter (for example, ra-ResponseWindow) indicating a length of a window to monitor a random access response.

The UE may be configured with a parameter (for example, ra-ResponseStartTiming defined in specific time units (for example, slots)) indicating a start position of a time to monitor a control channel (for example, PDCCH) that schedules a DL channel (for example, PDSCH) for an RAR to be transmitted on. Such a parameter may be configured/defined per specific ID (PLMN ID) or may be determined based on an offset configured/defined per specific ID (PLMN ID).

According to Embodiment 1-4, an association between RACH configurations (especially, RAR related configurations) and MNOs allows RACH related configuration different between the MNOs, enabling RAR related configuration per MNO to be appropriately performed.

### <<Embodiment 1-5>>

Pieces of information / parameters related to sequence/signal generation for an RACH preamble may be separately associated with different PRACH time/frequency resources (for example, RACH occasions).

A combination of a PRACH time/frequency resource and information/parameter related to sequence/signal generation for an RACH preamble may be configured/defined per specific ID (for example, PLMN ID).

With respect to a plurality of specific IDs, the same PRACH time/frequency resource or the same information/parameter related to sequence/signal generation for an RACH preamble may correspond.

With respect to a plurality of specific IDs, different PRACH time/frequency resources or different pieces of information / parameters related to sequence/signal generation for an RACH preamble may correspond.

For example, a combination of PRACH time/frequency resource #1 and RACH preamble sequence (sequence ID) #1 may correspond to PLMN ID #A and a combination of PRACH time/frequency resource #1 and RACH preamble sequence (sequence ID) #2 may correspond to PLMN ID #B.

According to Embodiment 1-5, an association of PRACH configurations (especially, configurations related to a PRACH time/frequency resource and configurations related to an RACH preamble sequence) and MNOs allows PRACH related configuration different between the MNOs, enabling PRACH related configuration per MNO to be appropriately performed.

### <<Embodiment 1-6>>

Different RACH related parameters configured/defined for the respective specific IDs (for example, PLMN IDs) described above in Embodiment 1-1 to Embodiment 1-5 may be included in specific system information.

The specific system information may be included in, for example, system information other than system information (for example, SIB1) used for scheduling of other system information (for example, SIB2 to SIB X (X is, for example, an integer of 11 or greater)) (for example, such other system information).

Such configuration as described above allows an increase in size of SIB1 to be suppressed, enabling signaling overhead related to SIB1 to be reduced.

The first embodiment described above allows an RACH/PRACH related configuration per MNO to be appropriately defined.

### <Second Embodiment>

A second embodiment relates to sequence/signal generation for an RACH preamble in a UE.

A UE may generate a sequence/signal for an RACH preamble by using specific information/parameter related to a specific ID (for example, PLMN ID).

The specific information/parameter related to a specific ID (for example, PLMN ID) may be, for example, a PLMN ID value.

The specific information/parameter related to a specific ID (for example, PLMN ID) may be, for example, a remainder value obtained by dividing the specific ID value by a specific value (for example, X) (the remainder value being a value calculated based on (specific ID) mod X, for example).

The specific value (for example, X) may be defined in advance in a specification or the UE may be configured with / notified of the specific value by using higher layer signaling (for example,

### RRC/MIB/SIB1).

The specific information/parameter related to a specific ID (for example, PLMN ID) may be, for example, a specific value associated with the specific ID.

Such association may be defined in advance in a specification or the UE may be configured with / notified of the association by using higher layer signaling (for example, RRC/MIB/SIB1).

The UE may determine, based on the specific information/parameter related to a specific ID (for example, PLMN ID), a root sequence to be used for generation of a sequence for a preamble.

The UE may determine, based on the specific information/parameter related to a specific ID (for example, PLMN ID), a value of a cyclic shift with respect to a certain root sequence (for example, a value calculated based on a multiple of N_cs), the value used for generation of a sequence for a preamble.

The second embodiment described above allows sequence/signal generation for an RACH preamble par MNO to be appropriately performed.

### <Third Embodiment>

A third embodiment relates to a random access response.

In the present disclosure, a random access response (RAR), a PDCCH for an RAR to be transmitted on, message 2, message B, and a response for a RACH (random access preamble / RACH preamble) may be interchangeably interpreted.

In the present disclosure, a message scheduled by an RAR, a PUSCH scheduled by an RAR, message 3, a message 3 PUSCH, an RRC setup request (for example, RRCSetupRequest), and message A may be interchangeably interpreted.

Such an RAR may include information related to a resource for message 3 per specific ID (for example, PLMN ID).

A UE may determine, based on the information related to a resource for message 3, a resource used for transmission of message 3. The resource for message 3 (resource used for transmission of message 3) may be configured per specific ID.

The resource for message 3 may be, for example, at least one of a random access preamble ID of a MAC CE included in the RAR, frequency/time resource allocation for a (RAR UL grant) message 3 PUSCH, and a frequency hopping flag for a message 3 PUSCH.

For example, information related to frequency/time resource allocation for a message 3 PUSCH included in the RAR may be indicated/specified by using a specific ID (for example, PLMN ID) configured using broadcast information (for example, MIB/SIB (SIB X (X is any integer))) and an index of a configuration related to the frequency/time resource allocation for the PUSCH.

For example, the information related to frequency/time resource allocation for a message 3 PUSCH included in the RAR may be indicated/specified by using an index of an association defined in advance. The association may be, for example, a specific (default) association to be referenced in a case where no association is made by using the broadcast information (for example, MIB/SIB (SIB X)).

For example, information related to the random access preamble ID included in the RAR may be indicated as a difference value with respect to a random access preamble ID associated with a specific (for example, default) PLMN ID.

For example, the information related to the random access preamble ID included in the RAR may be indicated as a difference value between a random access preamble ID associated with a specific (for example, default) PLMN ID and a random access preamble ID associated with another PLMN ID.

The third embodiment described above allows information included in an RAR to be defined/configured per MNO, enabling a message scheduled by the RAR to be appropriately determined per MNO.

### <Fourth Embodiment>

A fourth embodiment relates to a message scheduled by an RAR (message 3 / RRC setup request).

In a message scheduled by an RAR, information/parameter related to a specific ID (for example, PLMN ID) may be included.

Such a message scheduled by an RAR may include a random value. The random value may be determined, for example, by using the information/parameter related to a specific ID (for example, PLMN ID).

The message scheduled by the RAR may include a new information element and, by using the new information element, the information/parameter related to a specific ID (for example, PLMN ID) may be notified.

Specific information/parameter related to a specific ID (for example, PLMN ID) may be, for example, a PLMN ID value.

The specific information/parameter related to a specific ID (for example, PLMN ID) may be, for example, a remainder value obtained by dividing the specific ID value by a specific value (for example, X) (the remainder value being a value calculated based on (specific ID) mod X, for example).

The specific value (for example, X) may be defined in advance in a specification or the UE may be configured with / notified of the specific value by using higher layer signaling (for example, RRC/MIB/SIB1).

The specific information/parameter related to a specific ID (for example, PLMN ID) may be, for example, a specific value associated with the specific ID.

Such association may be defined in advance in a specification or the UE may be configured with / notified of the association by using higher layer signaling (for example, RRC/MIB/SIB1).

A UE ID (for example, ue-Identity) that is set in an RRC setup request on the basis of a configuration (for example, PLMN configuration) related to a specific ID configured for the UE / base station may be a random value determined using information/parameter related to the specific ID (for example, PLMN ID).

For example, in a case where a plurality of PLMN IDs are configured for an SIB (for example, SIB1) transmitted from the base station and the plurality of PLMN IDs are configured for the UE, a random value determined using information/parameter related to a specific ID (for example, PLMN ID) may be (for example, always) included in message 3.

The fourth embodiment described above allows information included in a message scheduled by an RAR to be appropriately defined/configured per MNO.

### <Fifth Embodiment>

A fifth embodiment relates to determination of a resource for preamble transmission in a random access procedure and UL resources other than the resource.

A UE / base station may follow at least one method described in Embodiment 5-1/5-2 below.

### <<Embodiment 5-1>>

An association of a UL resource (for example, a resource for a UL shared/control channel) and a resource for an RACH preamble (RACH resource) may be configured/defined per specific ID (for example, PLMN ID).

Such an association may be configured for the UE by using higher layer signaling (for example, MIB/SIB (SIB X)).

An RACH resource may be configured per specific ID (for example, PLMN ID).

A UL resource may be configured per specific ID (for example, PLMN ID).

In a case where an RACH resource is configured per specific ID (for example, PLMN ID), a UL resource may not be configured per specific ID (for example. PLMN ID).

In a case where a UL resource is configured per specific ID (for example, PLMN ID), an RACH resource may not be configured per specific ID (for example. PLMN ID).

For a configuration of an RACH resource in the present embodiment, all/part of parameters included in an existing (for example, one defined in Rel. 18 or earlier versions) RACH configuration (for example, RACH-ConfigCommon/RACH-ConfigDedicated) may be defined/configured as a new information element for an operation according to the present embodiment.

Such a new information element may reference (for example, by using an index) to a parameter included in an existing (for example, one defined in Rel. 18 or earlier versions) RACH configuration (for example, RACH-ConfigCommon/RACH-ConfigDedicated).

For a configuration of a UL resource in the present embodiment, all/part of parameters included in an existing (for example, one defined in Rel. 18 or earlier versions) UL channel (for example, PUSCH/PUCCH) configuration (for example, PUSCH-ConfigCommon/PUCCH-ConfigCommon) may be defined/configured as a new information element for an operation according to the present embodiment.

Such a new information element may reference (for example, by using an index) to a parameter included in an existing (for example, one defined in Rel. 18 or earlier versions) UL channel (for example, PUSCH/PUCCH) configuration (for example, PUSCH-ConfigCommon/PUCCH-ConfigCommon).

Note that at least one of a configuration of an RACH resource (for example, RACH related parameter) and a configuration of a UL resource (for example, PUSCH/PUCCH related parameter) may be interchangeably interpreted as a message A / message B related parameter. The message A / message B may mean message A / message B in a 2-step RACH.

### <<Embodiment 5-2>>

The UE may perform, based on a configuration related to a specific ID (for example, PLMN configuration) configured for the UE / base station, a random access procedure by using a specific UL resource.

Such a specific UL resource may be, for example, a UL resource other than any PRACH/RACH resource.

For example, in a case where a plurality of PLMN IDs are configured for an SIB (for example, SIB1) transmitted from the base station (and an association of an RACH resource and another UL resource is configured per PLMN ID) and the plurality of PLMN IDs are configured for the UE (and the UE supports a UE capability related to the present embodiment), the UE may perform a random access procedure by using an RACH resource and UL resource that are associated with one PLMN ID.

According to the fifth embodiment described above, with use of an RACH resource / UL resource associated with a specific ID, a random access procedure per MNO that allows the number of steps to be reduced and resource utilization efficiency to be enhanced is able to be performed.

### <Sixth Embodiment>

A sixth embodiment relates to a radio network temporary identifier (RNTI) related to an initial access / random access.

A specific RNTI may be determined based on specific information/parameter related to a specific ID (for example, PLMN ID).

Such a specific RNTI may be, for example, at least one of an RNTI related to system information (for example, SI-RNTI), an RNTI related to a random access (for example, RA-RNTI), and a temporary cell-specific RNTI (Temporary C-RNTI).

The specific information/parameter related to a specific ID (for example, PLMN ID) may be, for example, a PLMN ID value.

The specific information/parameter related to a specific ID (for example, PLMN ID) may be, for example, a remainder value obtained by dividing the specific ID value by a specific value (for example, X) (the remainder value being a value calculated based on (specific ID) mod X, for example).

The specific value (for example, X) may be defined in advance in a specification or the UE may be configured with / notified of the specific value by using higher layer signaling (for example, RRC/MIB/SIB1).

The specific information/parameter related to a specific ID (for example, PLMN ID) may be, for example, a specific value associated with the specific ID.

Such association may be defined in advance in a specification or the UE may be configured with / notified of the association by using higher layer signaling (for example, RRC/MIB/SIB1).

The sixth embodiment described above allows an RNTI related to an initial access / random access to be determined per MNO, allowing an initial access / random access appropriate for each MNO.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

The specific condition may indicate at least one of the following:
- An operation is performed in FR3. FR3 may be all or part of a range of 7125 to 24250 MHz.
- An operation is performed in FRx. FRx may be all or part of a range higher than 71 GHz.

At least one of the above-described embodiments may be applied only to a UE that has reported a specific UE capability or that supports the specific UE capability.

The specific UE capability may indicate at least one of the following:
- supporting of specific processing/operation/control/information for at least one of the above-described embodiments.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

The specific UE capability may be defined as mandatory capability without UE capability signaling or may be defined as mandatory capability with UE capability signaling. The specific UE capability may be defined as optional (selectable) capability without UE capability signaling or may be defined as optional capability with UE capability signaling.

At least one of the above-described embodiments may be applied when the UE is configured/activated/triggered with specific information related to the above-described embodiment (or performance of the operation of the above-described embodiment) by higher layer signaling/physical layer signaling. The specific information may indicate at least one of the following:
- information indicating enablement/disablement of an operation of the above-described embodiments.
- an RRC parameter for a specific release (for example, Rel. 18/19/20/21). Such an RRC parameter may have a name obtained by adding "r18"/"r19"/"r20"/"r21" to an existing RRC parameter name.

In a case where a UE does not support at least one of the specific UE capabilities above or is not configured with the specific information above, operation of Rel. 15/16/17/18/19 may be applied, for example.

### (Supplementary Note)

Regarding one embodiment of the present disclosure, the following supplementary notes of the invention will be given.

### {Supplementary Note 1}

A terminal including: a receiving section that receives a plurality of random access channel configurations, each of the plurality of random access channel configurations being associated with a public land mobile network indicator (PLMN ID); and a control section that controls, based on a PLMN ID associated with the terminal and on at least one of the plurality of random access channel configurations, determination of a random access preamble and reception of a random access response for the random access preamble.

### {Supplementary Note 2}

The terminal according to supplementary note 1, wherein the control section generates, based on information related to the PLMN ID associated with the terminal, a sequence of the random access preamble.

### {Supplementary Note 3}

The terminal according to supplementary note 1 or 2, wherein a resource for a physical uplink shared channel (PUSCH) scheduled by the random access response is a resource associated with a PLMN ID.

### {Supplementary Note 4}

The terminal according to any one of supplementary notes 1 to 3, wherein the control section controls transmission of a physical uplink shared channel (PUSCH) that includes information related to the PLMN ID associated with the terminal and is scheduled by the random access response.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

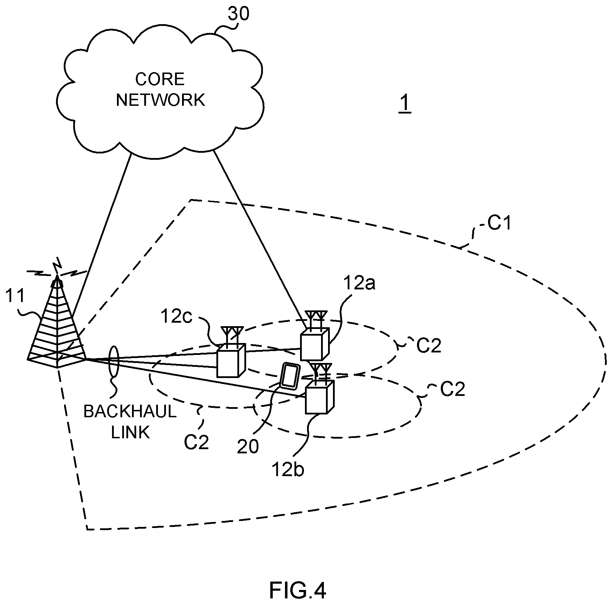

FIG. 4 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

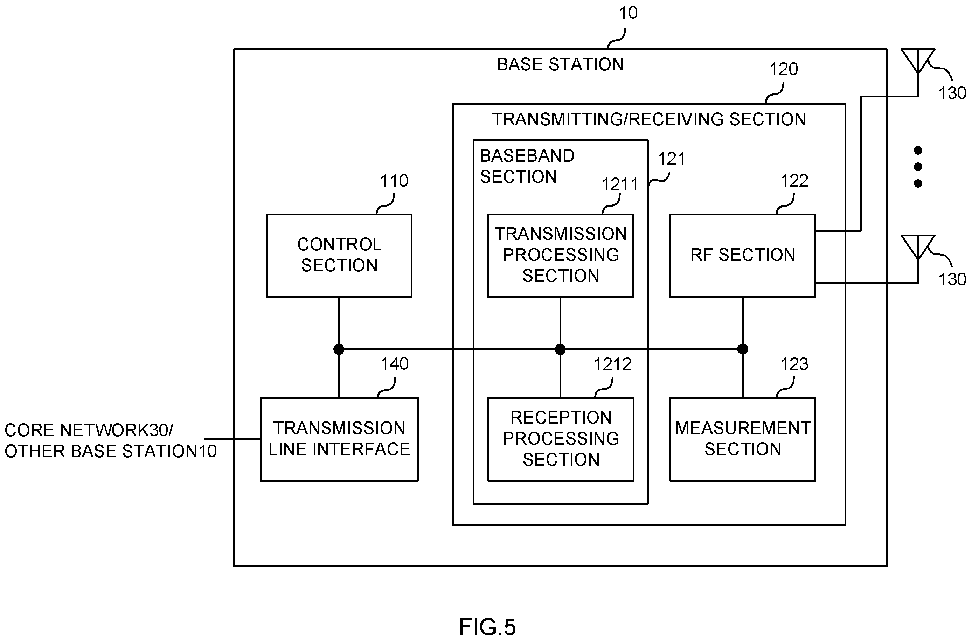

FIG. 5 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a plurality of random access channel configurations. Each of the plurality of random access channel configurations may be associated with a public land mobile network indicator (PLMN ID). The control section 110 may control reception of a random access preamble determined based on a PLMN ID associated with a terminal and on at least one of the plurality of random access channel configurations, and control transmission of a random access response for the random access preamble (the first embodiment).

### (User Terminal)

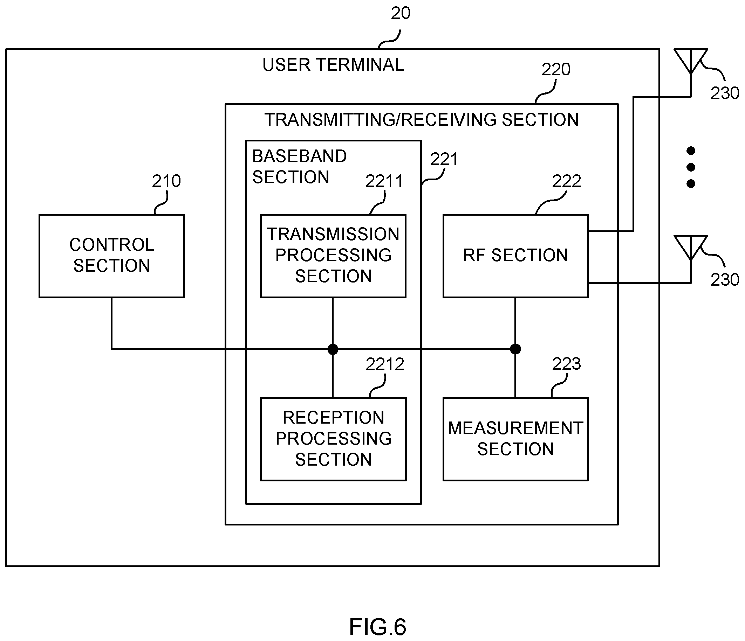

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a plurality of random access channel configurations. Each of the plurality of random access channel configurations may be associated with a public land mobile network indicator (PLMN ID). The control section 210 may control, based on a PLMN ID associated with the user terminal 20 and on at least one of the plurality of random access channel configurations, determination of a random access preamble and reception of a random access response for the random access preamble (the first embodiment).

The control section 210 may generate, based on information related to the PLMN ID associated with the user terminal 20, a sequence of the random access preamble (the second embodiment).

A resource for a physical uplink shared channel (PUSCH) scheduled by the random access response may be a resource associated with a PLMN ID (the third embodiment).

The control section 210 may control transmission of a physical uplink shared channel (PUSCH) that includes information related to the PLMN ID associated with the user terminal 20 and is scheduled by the random access response (the fourth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

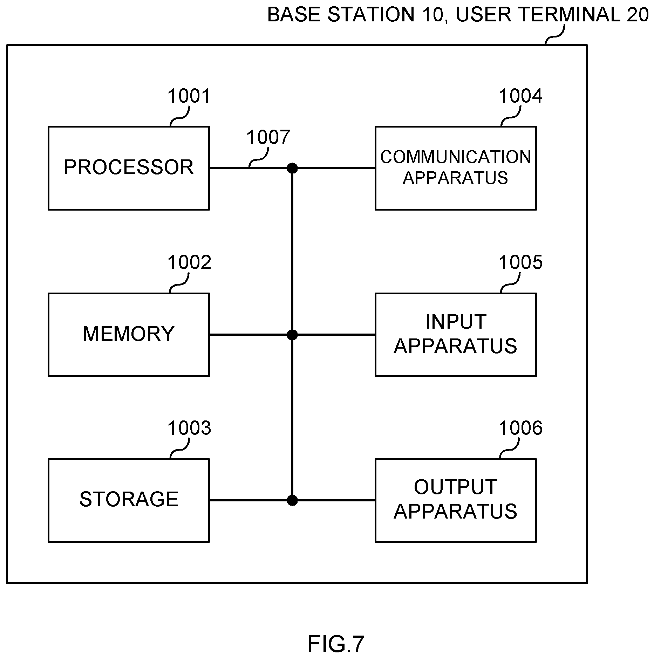

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

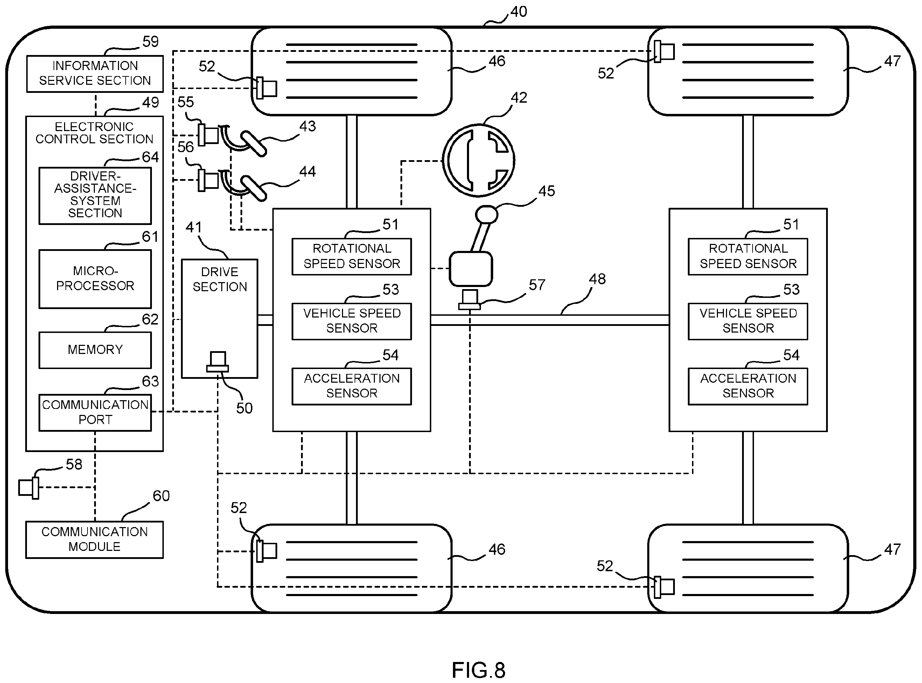

FIG. 8 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a plurality of random access channel configurations, each of the plurality of random access channel configurations being associated with a public land mobile network indicator (PLMN ID); and
a control section that controls, based on a PLMN ID associated with the terminal and on at least one of the plurality of random access channel configurations, determination of a random access preamble and reception of a random access response for the random access preamble.

2. The terminal according to claim 1, wherein
the control section generates, based on information related to the PLMN ID associated with the terminal, a sequence of the random access preamble.

3. The terminal according to claim 1, wherein
a resource for a physical uplink shared channel (PUSCH) scheduled by the random access response is a resource associated with a PLMN ID.

4. The terminal according to claim 1, wherein
the control section controls transmission of a physical uplink shared channel (PUSCH) that includes information related to the PLMN ID associated with the terminal and is scheduled by the random access response.

5. A radio communication method for a terminal, the radio communication method comprising:
receiving a plurality of random access channel configurations, each of the plurality of random access channel configurations being associated with a public land mobile network indicator (PLMN ID); and
controlling, based on a PLMN ID associated with the terminal and on at least one of the plurality of random access channel configurations, determination of a random access preamble and reception of a random access response for the random access preamble.

6. A base station comprising:
a transmitting section that transmits a plurality of random access channel configurations, each of the plurality of random access channel configurations being associated with a public land mobile network indicator (PLMN ID); and
a control section that controls reception of a random access preamble determined based on a PLMN ID associated with a terminal and on at least one of the plurality of random access channel configurations, and controls transmission of a random access response for the random access preamble.
